(19)

Europäisches Patentamt

European Patent Office

Office européen des brevets

(11) **EP 4 502 988 A1**

(12) **EUROPEAN PATENT APPLICATION**

(43) Date of publication:
**05.02.2025 Bulletin 2025/06**

(21) Application number: 23382798.9

(22) Date of filing: **31.07.2023**

(51) International Patent Classification (IPC):
*G09B 19/00* (2006.01)   *G01P 3/68* (2006.01)

(52) Cooperative Patent Classification (CPC):
**G01P 1/07; G01P 3/68; G09B 19/0038**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Fast Free Lane, S.L.
Las Palmas (ES)**

(72) Inventor: **MATA RODRÍGUEZ, Carlos Javier
35110 Vecindario, Santa Lucía de Tirajana, Las Palmas (ES)**

(74) Representative: **ABG Intellectual Property Law, S.L.
Avenida de Burgos, 16D
Edificio Euromor
28036 Madrid (ES)**

(54) **METHOD AND SYSTEM FOR SHOWING A FORWARD SPEED REFERENCE ON A SURFACE TO AN ATHLETE**

(57) The present invention relates to a method and a system for showing a forward speed reference on a surface to an athlete. In particular, the system is designed to exhibit an optical reference on a surface to an athlete such that the athlete moves forward in his/her sport activity at a pace imposed by the optical reference. In a preferred example, the surface is the surface of the bottom of a pool so as to serve as a reference for a swimmer who is able to see the bottom of the pool and the optical reference during his/her forward movement. The invention is characterized in that the surface is not planar and is formed by two or more segments with different inclinations. The method for showing a forward speed reference on the surface to the athlete is implemented in a control unit comprising a processor adapted to act on a light beam emitter and for the latter to move such that the optical reference moves forward with the preset criteria.

FIG.1

EP 4 502 988 A1

**Description**

**OBJECT OF THE INVENTION**

The present invention relates to a method and a system for showing a forward speed reference on a surface to an athlete. In particular, the system is designed to exhibit an optical reference on a surface to an athlete such that the athlete moves forward in his/her sport activity at a pace imposed by the optical reference. In a preferred example, the surface is the surface of the bottom of a pool so as to serve as a reference for a swimmer who is able to see the bottom of the pool and the optical reference during his/her forward movement.

The invention is characterized in that the surface is not planar and is formed by two or more segments with different inclinations.

The method for showing a forward speed reference on the surface to the athlete is implemented in a control unit comprising a processor adapted to act on a light beam emitter and for the latter to move such that the optical reference moves forward with the preset criteria.

**BACKGROUND OF THE INVENTION**

Existing systems for assisting athletes to train and improve their speed and strength are increasingly more popular. In particular, amateur, but especially professional swimmers need to measure their pool swimming times to prepare for competitions. Measuring time is an indirect way of having control over the forward speed at all times and to thus adjust the level of effort to the preset effort for that training session or race.

To that end, in the specific case of swimming in a pool, there are devices that allow knowing when a swimmer reaches the ends of a pool lane, usually because these devices are submerged in the pool, on the end walls of the pool lanes, and swimmers have to touch them, like those used in official competitions.

Some of these devices, aimed primarily at training, such as the one in patent application US10102686B2, incorporate a display which allows seeing how many laps the swimmer has swum and the total time or the time of each lap. However, they do not allow for suitable tracking of the swimmer's training session along the entire lane in which he/she is swimming or the adaptation thereof to the swimmer's needs according to the training to be performed. Nor do they include means for adjusting the forward movement and for such forward movement not to depend on the shape and inclination of the bottom of the pool when it is not a horizontal plane.

There are other systems that help the swimmer which are based on distributing a set of lights along the path of an athlete, such as a swimmer in a pool, for example; however, systems of this type are not usually portable and require being installed with multiple light generation points, as many as may be needed to define a path.

In particular, when these known systems are used on surfaces with a shape that is not planar in its entirety, for example, with segments having different inclinations, they are unable to show a correct speed reference to the swimmer.

The invention overcomes the described drawbacks by setting an algorithm intended for the control of a light beam emitter which adapts the speed of the optical reference on the path thereof. The invention is characterized by the use of a model that approximates the shape of the surface on which the optical reference is projected in segments such that it adapts the speed in each segment depending on the shape and on the spatial arrangement thereof based on the device installation position.

**DESCRIPTION OF THE INVENTION**

The present invention provides a solution for the aforementioned problems by means of a method for showing a forward speed reference on a surface to an athlete according to claim 1, and a system for showing a forward speed reference on a surface to an athlete according to claim 9. Preferred embodiments of the invention are defined in the dependent claims.

In a first inventive aspect, the invention provides a method *for showing a forward speed reference on a surface to an athlete, wherein the athlete moves forward according to a longitudinal direction X-X', the method comprising the use of the following elements:*

- *a light beam emitter;*
- *an actuator adapted to modify the orientation of the light beam emitter;*
- *a processor in communication with the actuator;*

*wherein the method comprises the following steps:*

> *a) defining a geometric model of the surface on which the speed reference is shown;*
> *b) defining a partition of the surface of the geometric model according to the longitudinal direction X-X' into n segments $t_r$, r = 1,...,n, with n being a preset integer;*
> *c) determining an approximation of the manner in which each segment extends according to the longitudinal direction X-X' by means of a curve;*

*and wherein the processor is adapted to carry out the following steps:*

> *d) providing instructions to the actuator for the light emitter, in the operating mode, to be oriented such that the light beam is incident upon a first point of the first segment of the surface showing an optical reference,*
> *e) following, in an orderly manner, r = 1,...,n , for each segment $t_r$ and according to the longitudinal direction X-X', providing forward movement instructions to the*

*actuator to:*

> *calculate the angular velocity that determines the change in orientation of the light beam emitter such that the light beam of the light emitter is incident upon a point of the segment $t_r$ of the surface moving of a preset reference speed; provide instructions to the actuator for the light emitter to move forward according to the angular velocity determined in the preceding step.*

The method consists of projecting a light beam on a surface that is visible for the athlete at a certain speed. Athlete is understood to mean a swimmer or a runner. The athlete can thereby determine at what speed he/she wants to move forward when doing an exercise during training by having a reference that allows him/her to know whether to maintain the exercise pace or whether to adapt it by increasing or reducing the effort. In the preferred mode of this invention, the athlete is a swimmer that is moving over the free surface of a pool, above the surface where the light beam is projected, which is the bottom of the pool. To carry out the method of the invention, a system is required comprising a light beam emitter; an actuator adapted to modify the orientation of the light beam emitter as it is desired to cause the optical reference to move forward over the surface, for example the bottom of the pool; and a processor in communication with the actuator and/or the light emitter to carry out control of the actuator in compliance with the forward movement requirements.

With this set of elements, the light emitter is positioned at a point from which it can be visually accessed from the surface where the light beam is to be projected. In the specific case of a pool, the light emitter is positioned at the beginning of a lane, in a position proximal to the wall and also preferably proximal to the free surface of the water. The actuation means, controlled by the processor, modify the angle of the light emitter over time, achieving the forward movement of the point of the light beam that intersects the bottom of the pool, the surface on which the optical reference is illuminated.

The optical reference which is generated by the intersection of the light beam with the surface is the speed reference that the athlete sees in the operating mode, and to ensure the forward speed of the athlete, the athlete only has to move forward following the optical reference.

Customarily, the forward movement of an optical reference is not followed exactly by the athlete given that the distance from the athlete to the mark, the relative position adopted by the athlete with respect to the surface where the mark is projected, or the non-planar shape of the surface are factors that impose speeds of the optical reference that are not necessarily constant.

The forward movement direction of the athlete is the longitudinal direction X-X'. However, the surface where the light beam is projected does not have to be parallel to the longitudinal direction. This is the case of the bottom of a pool with a variable slope or with a discontinuous slope dividing the surface into two or more segments.

Likewise, given that the light beam is not perpendicular to the surface and the surface is formed by several segments, the method establishes a set of steps allowing control in these circumstances, thereby leading to the optical reference that is obtained when the light beam hits the surface moving forward with a preset speed.

In any case, the speed to be shown by the optical reference is preset.

In a first step of the method, there is defined a geometric model of the surface the function of which is to approximate the shape of the real surface upon which the light beam is to be incident, and to thus allow the calculations giving rise to the parameters to be sent to the actuator which modifies the orientation of the light beam.

The geometric model comprises mathematic entities representing an approximate shape of the real surface, in the preferred example, the shape of the bottom of a pool.

Once the surface has been approximated by the geometric model, a partition of the surface into an integer number of segments $t_r$ is defined. This step defining a partition can be carried out in the moment of defining the geometric model, giving rise to the geometric model which already has the set of segments $t_r$.

The model preferably comprises approximating surfaces, one per segment, wherein the sequence of segments gives rise to a surface that connects the beginning and the end of the path to be followed.

The change from one segment to another does not have to correspond to a discontinuity in the slope of the real surface; it may be because the slope varies progressively and is different after one point, or because the approximation of the whole of the surface by means of several segments is better. Likewise, each of the segments can be represented, for example, by a different mathematic entity. When the real surface does show discontinuities, for example, in the slope, the discontinuity is made to correspond with a change in segment.

Each segment is approximated by curves, considering a curve in its broadest mathematical conception where a straight line is a specific case of a curve with zero curvature.

According to the method, the point of intersection of the light beam on the real surface is determined on the model, that is, the point of intersection between the light beam and the geometric representation of the surface in segments is determined. The point of intersection is determined according to the preset forward speed.

Starting from the point of intersection and the point of light beam emission, a straight line which allows calculating the target orientation of the light beam that the light beam emission means must achieve is defined by acting on the actuator that moves said light beam emission means.

That is, the intersection located on the geometric model is what determines the angular position of the light beam to be imposed on the light beam by acting on the actuation means.

Therefore, the data to be imposed on the optical reference is the forward speed, such that the geometric model allows determining the angle to be adopted by the light beam. The actuation means activated by the processor act until said angular position is reached for a plurality of points until moving forward from the initial position to the end of the path.

Calculating the angular velocity that determines the change in orientation of the light beam emitter is such that the light beam of the light emitter is incident upon a point of the segment $t_r$ of the surface, moving at a preset reference speed. It must therefore be interpreted either as the angular velocity being calculated directly from the forward speed imposed on the optical reference, or indirectly where the speed is calculated by taking time intervals, light beam orientation update intervals. Given these time intervals, the objective is to move forward enough space so that the resulting speed is the quotient of the space moved forward divided by the time interval between updates of the rotated angle in the change in light beam orientation.

There is a first configuration step. In this configuration step, once the surface on which the speed reference is shown in segments has been defined, the processor receives the information and carries out a calculation step and instruction step for the actuator and the light emitter. Initially, the processor indicates or confirms the position of the actuator, which is preferably a stepper motor that moves the light emitter. The processor thereby confirms that the actuator is oriented in a first position and shows an optical reference on the beginning of the surface, for example the surface of the bottom of a pool in the preferred example, such that the light beam is incident upon a first point of the first segment, i.e. at the first end of the surface, where the athlete will begin his/her training.

Subsequently, the processor gives forward movement commands to the actuator and the light emitter. The forward movement commands are given in segments from the first segment where training starts and continuing with the following segments according to the longitudinal direction X-X' until the last segment that defines the surface. Therefore, according to the forward speed preset by the athlete, the method further comprises the steps of calculating the angular velocity of the light beam required in each segment $t_r$ and providing forward movement instructions for the actuator to change the orientation of the light emitter, with the latter moving and changing orientation in order to set the optical reference of the incident light to the forward speed determined by the athlete.

In alternative embodiments, the geometric model and the forward speed are defined as initial information via a mobile application. The mobile application asks the user or athlete that will be training to set the geometry of the surface on which the optical reference is projected and the training speed. Subsequently, the mobile application connects with the processor and carries out the described method to act on the control means of the system.

In one embodiment of the method of the invention, *the method comprises a step e) wherein the angular velocity is recalculated a plurality of times during the forward movement of the light emitter along the same segment $t_r$.*

In turn, the rotation speed of the light emitter does not have to be constant in each segment, so it is updated to be adjusted to the speed corresponding to the place where the reference point is located.

Given that, as the light beam moves forward and the distance at which the light beam is to be projected increases, the necessary inclination that the actuator must rotate is less is and, therefore, said angular velocity is as well. Furthermore, a change in the inclination of the surface upon which the light beam is incident also requires recalculating the angular velocity. According to one example, the rotation speed of emitter is updated in preset time intervals. For example, in one segment $t_r$ the rotation speed is updated a plurality of times.

In another embodiment, *in step e), the calculated angular velocity is variable and dependent on the point of incidence of the light beam on the segment $t_r$.*

Optionally, as mentioned above, the changes in slope or forward movement along a surface on which the angle is increasingly smaller impose a change in angular velocity of the light beam. According to that exemplary embodiment, the change in angular velocity is variable and dependent on the point of incidence, so the variation is instantaneous and allows being followed better when the required changes in angular velocity are important.

This mode of operation causes the optical reference not to show abrupt changes in behavior and makes the optical reference independent of surface configurations that may be very different from a plane or that may correspond to positions far from the point of light emission, resulting in intersection angles far from the condition of perpendicularity.

In one embodiment of the method of the invention, *the approximation curve of the manner in which each segment $t_r$ comprised in the geometric model extends is a linear function.*

Preferably, this embodiment is given when the athlete's training surface is defined on planar surfaces which, when considered according to the forward movement direction, are modelled by means of straight lines. The use thereof on surfaces with little variation or which are approximated by means of a plurality of straight segments is also possible. In this case, calculations are simplified so that the processor does not have to perform many operations. This allows the use of processors with lower computational capabilities.

Additionally, the approximation curve of the manner in which each segment $t_r$ extends can also be *a function defined in segments by polynomial functions, a spline function, or a combination of both.*

Therefore, this embodiment is optionally given when the athlete's training surface comprises curved surface on which the light beam must be reflected. Another application of interest is on surfaces with complex curves that can be approximated with a lower number of segments given that polynomial functions allow the approximation of a high degree of geometric conditions.

Preferably, the linear, polynomial, and particularly spline expressions are according to the forward movement direction of the optical reference considering that the curve that is generated and extends preferably according to the longitudinal direction is repeated in the transverse direction generating the surface. That is, for example in a pool, the variations in inclination are only in the forward movement direction of the swimmer.

Spline is understood to mean a piecewise polynomial approach with continuity between pieces both in the value of the function and in the first derivatives. In the case of using second order splines, the continuity is in the function, in the first and in the second derivative, or, equivalently, in the curvature.

Other embodiments contemplate the preset speed in the mobile application as starting data being the speed of the light beam in order to define the speed at which the athlete must move and improve his/her training. In this embodiment, *the preset reference speed is a constant speed of the point of incidence of the beam on the surface.*

This criterion allows simple calculations, especially when the surfaces are planar but inclined. Planar surfaces are preferably modelled by means of straight lines in the geometric model.

Optionally, *the preset reference speed is a speed of the point of incidence of the beam on the surface, such that the component of the speed projected on the longitudinal direction X-X' is constant.*

In this case, although the calculations may be more complex and raise the computational burden of the processor, the user sees an optical reference that moves forward in a constant manner regardless of the shape and inclination of the surface on which the optical reference is projected. That is because during the forward movement of the athlete over the optical reference, what the athlete sees is precisely the projection of the optical reference according to the direction perpendicular to the longitudinal direction X-X'.

In a preferred embodiment of the invention, the surface where the light beam is reflected is divided into or defined by an *n number of segments, wherein n, the number of segments, is two.*

This exemplary embodiment is highly useful because even curved surfaces with little curvature allow defining two approximating straight lines according to the longitudinal direction, and, with a reduced computational cost, having a good reference in the sense of being a reference that follows the speed preset for the athlete with a high degree of exactness.

In a second inventive aspect, the invention provides a system for showing *a forward speed reference on a surface to an athlete, wherein the athlete moves forward according to a longitudinal direction X-X', the system comprising:*

- *a light beam emitter;*
- *an actuator adapted to modify the orientation of the light beam emitter;*
- *a processor in communication with the actuator; and wherein,*

*with the following being preset:*

- *a geometric model of the surface on which the speed reference is shown;*
- *a partition of the surface of the geometric model according to the longitudinal direction X-X' into n segments $t_r$, r = 1,...,n, with n being a preset integer; and*
- *an approximation in the manner in which each segment extends according to the longitudinal direction X-X' by means of a curve;*

*the processor is adapted to carry out steps d) and e) of the described method.*

The light beam emitter of the system of the invention is in charge of emitting light which is incident upon a surface to guide an athlete. Preferably, the light beam emitter can comprise laser (Light Amplification by Stimulated Emission of Radiation) technology. However, it can also be an LCD (liquid-crystal display), LED (light emitting diode), DLP (digital light processing), etc., or a combination thereof.

The actuator is in charge of moving and changing the orientation of the light emitter. The movement is rotational, wherein the light emitter gradually rotates with respect to an axis. According to one exemplary embodiment, the axis is a physical shaft with the ability to rotate in a direction perpendicular to the longitudinal direction and to which the light emitter is attached, such that the light beam changes its orientation in order to be able to move forward across the entire surface.

Lastly, the processor is connected to the actuator because the processor is in charge of sending movement instructions to the actuator, according to the steps of the method explained above. The steps are therefore implemented in the processor which acts specifically, determining the rotation speed of the actuator and acting on same to carry out the preset rotation.

It should be noted that a rotation speed is imposed, which must be understood in a broad sense where, if the actuator is a stepper motor, the instructions it receives pertain to angular displacement, not angular velocity. However, given that the imposed forward movement is every certain time instant, the effect is one of imposing a rotation speed. It is thereby understood that this specific way of imposing speed is in accordance with the described steps. That is, the movements are discrete and the angular velocity will be considered as the average resulting from measuring the quotient between the angular displacement or the rotated angle and the time elapsed between the instants in which the forward movement occurs.

In one embodiment, *the processor is in communication with the light beam emitter and configured to activate the light beam emitter, deactivate the light beam emitter, or both actions.*

Advantageously, this embodiment allows the system to be better automated since it is possible to control all the elements that participate in the system by means of the control of the processor.

## DESCRIPTION OF THE DRAWINGS

These and other features and advantages of the invention will become more apparent based on the following detailed description of a preferred embodiment, given solely by way of illustrative and non-limiting example, in reference to the attached figures.

Figure 1 schematically shows a side view of an example of training means and of the surface on which the optical reference of the speed is shown.

Figure 2 shows a perspective view of the system according to a specific exemplary embodiment which is configured to show a forward speed optical reference.

Figure 3 shows a view of an exemplary embodiment of the aspect of a display intended for collecting input data which allows defining the geometric model. In particular, the display is of a mobile application for carrying out the method of the invention.

## DETAILED DISCLOSURE OF THE INVENTION

According to a first inventive aspect, the present invention relates to a method for showing a forward speed reference (1) on a surface (2) to an athlete (7), wherein the athlete (7) moves forward according to a longitudinal direction X-X'. The specific example that is described is a pool with a bottom in two segments ($t_1$, $t_2$), each segment having a different inclination. According to this exemplary embodiment, the athlete (7) is a swimmer and the longitudinal direction X-X' is parallel to the free surface of the water and according to the forward movement direction which coincides with the direction of a lane of the pool.

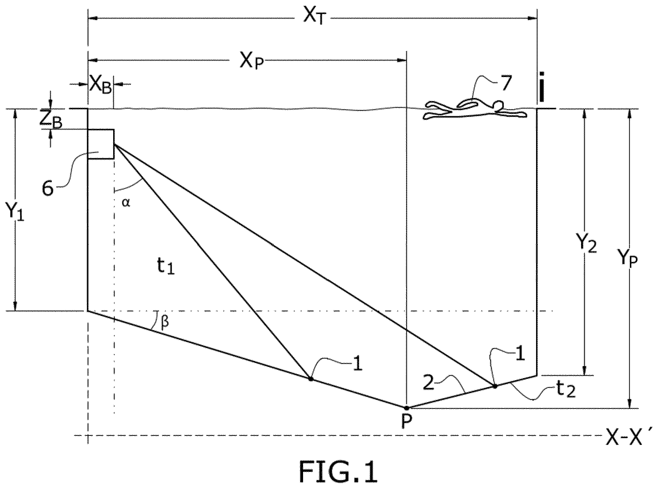

In a preferred example and as shown in Figure 1, the surface (2) is the surface of the bottom of a pool in which an optical reference (1) resulting from the incidence of a light beam is shown. The optical reference (1) serves as a forward movement reference for a swimmer (7) who is able to see the bottom of the pool. The reference (1) acts during the forward movement, allowing the swimmer to be able to adapt his/her exercise pace upon observing the forward movement of the reference (1).

Given that the pool is shown in a sectional view, the surface where the reference (1) is shown appears in the figure as a line, as does as the free surface of the water.

Likewise, when referring to approximation by lines or curves of the segments into which the surface is divided, these lines or curves are understood to correspond to the section.

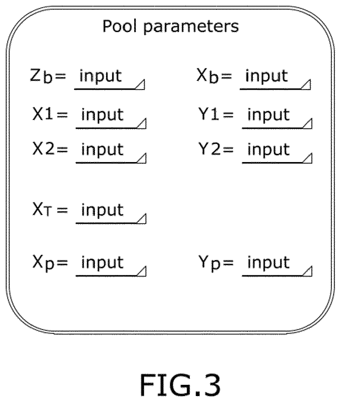

The method begins with a step in which a geometric model of the surface (2) on which the speed reference (1) is shown must be defined, and a partition of the surface (2) of the geometric model according to the longitudinal direction X-X' into *n* segments $t_r$, $r = 1,...,n$, with *n* being a number of segments that is a preset integer, is also defined. In a preferred embodiment, the geometric model and the partition of the surface (2) is defined by means of information collected in a mobile application, as shown in Figure 3.

As shown in Figures 1 and 3, the minimum information required for starting up the system (6) and carrying out the method of the invention is the definition of the geometry of the medium. For example, the location of the system (6), and namely of the light beam output emitter (3), is defined by means of parameters $X_b$ and $Z_b$, the distance of the system to the origin according to the longitudinal direction X-X' and the vertical direction according to the action of gravity, respectively. In the configuration of Figure 1, the pool is defined by means of the position of three points ($P_1$, $P$, $P_2$) defined by means of parameters $X_1$, $Y_1$, $X_P$, $Y_P$, $X_2$, $Y_2$, wherein $X_2$ is the same as $X_T$, the total length of the pool and as shown in Figure 1. Points $P_1$ and $P_2$ define the beginning and the end of the bottom of the pool, the surface where the light beam is to be projected, whereas P defines an intermediate point necessary for defining the bottom of the pool in two straight segments.

Once the data relating to the configuration of the surface (2) of the bottom of the pool with respect to the position and orientation of the light emitter (3) has been input, an approximation of the shape of the bottom is determined, in which each segment $t_r$ extends according to the longitudinal direction X-X' by means of a curve. In this case the curves will be two straight lines, one per segment ($t_1$, $t_2$), since the bottom of the pool is formed by two planes separated by a line which is represented by point P in the section view, and in the same way, the planes result in two straight lines in a section view. The section in this case is in accordance with a plane containing the longitudinal direction and the vertical direction taken according to the action of gravity.

The definition of the training medium and the surface (2) upon which the light beam must be incident, generating an optical reference (1), gives rise to a configuration such as the one shown in Figure 1.

In Figure 1, a system (6) located at the beginning of a lane of the pool, in a position proximal to the wall and also preferably proximal to the free surface of the water, configured for showing the forward speed optical reference (1) on the surface (2) of the bottom of the pool, can also be seen. The reference (1) moves forward in a longitudinal direction X-X', marking the training pace for the swimmer (7). It is said to move forward in the longitudinal direction X-X' because even though it follows the layout of the lines that are shown in a sectional view, the forward movement also occurs according to a projection in the longitudinal direction X-X'.

Initially the light beam moves forward along the first segment, the one shown on the left in the figure, and next it moves forward along the second segment, the one shown on the right, until reaching the end of the pool.

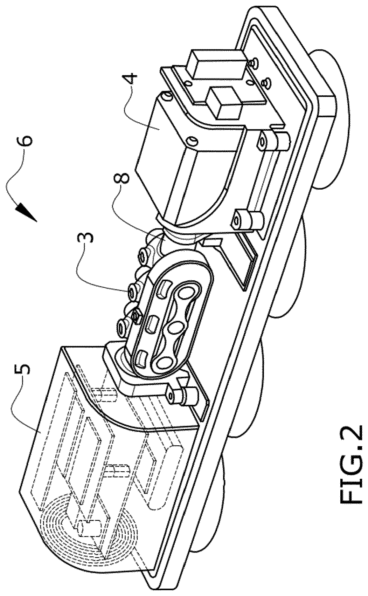

In order to achieve the forward movement of the reference (1) along the entire surface (2) of the bottom of the pool, the method must be carried out according to an example of the invention and by means of a system (6) also according to an exemplary embodiment. The system (6) shown in Figure 2 comprises a light beam emitter (3) secured to a rotatable shaft (8) and moved by an actuator (4) commanded by a processor (5). The actuator (4) is adapted to modify the orientation of the light beam emitter (3), and the processor (5) is in communication with the actuator (4) to establish the control thereof.

As shown in Figure 2, the system (6) comprises a surface which, on one hand, comprises anchorages for fixing the system (6) to a wall of the pool, and on the other hand comprises securing the processor (5), followed by a securing which allows the shaft (8) to rotate at a distal end, and to which the emitter (3) is secured in the center of the shaft (8) and the actuator (4) at a proximal end of the shaft (8). When the system (6) starts up, the actuator (4), which is a stepper motor in the preferred example, transmits rotational movement to the shaft (8) to move the emitter (3) an angle ($\alpha$) every so often, such that the optical reference (1) moves forward on the surface (2).

The light emitter (3) is in charge of emitting the light beam which gives rise to the optical reference (1) on the surface (2) of the bottom of the pool upon which it is incident, and when the optical reference (1) moves forward on the surface (2), it shows a forward speed which the swimmer (7) can follow during training. To that end, the light beam emitter (3) must change its orientation, so it is necessary for the emitter (3) to be supported by the rotating shaft (8) connected to at least one actuator (4) that makes it rotate. Therefore, the light beam gives rise to a point of incidence, the optical reference (1), with a forward speed that can be shown at all the points of the surface (2) of the bottom of the pool. In the embodiment shown in Figure 1, the emitter (3) is shown emitting a light beam in two specific positions, one in each segment ($t_1$, $t_2$) separated by an angle ($\alpha$). The forward movement conditions in each segment ($t_1$, $t_2$) will be different for a preset forward speed.

The actuator (4), which is preferably a stepper motor, is connected to the emitter (3) by means of the rotating shaft (8) and is in charge of rotating the shaft (8) and the light beam emitter (3) according to the instructions received by the processor (5). The processor (5) is adapted to carry out the steps of the method described below.

According to this exemplary embodiment, the processor (5) is connected via Wi-Fi or Bluetooth to a mobile telephone or external apparatus from which it receives the data and the instructions to start up the system (6) and the method. Initially, the processor (5) provides instructions to the actuator (4) for the light emitter (3), in the operating mode, to be oriented at first such that the light beam is incident upon a first point of the first segment showing an optical reference (1). The first point upon which the light beam is incident is the point where the athlete begins his/her training.

Next, the processor (5), following, in an orderly manner, the segments $t_r$ from $r = 1$, to $r = n$ and according to the longitudinal direction X-X', provides forward movement instructions to the actuator (4) to move the light beam emitter (3) with an angular velocity ($\omega$) such that the point of incidence generated by the optical reference (1) moves forward with a preset speed. To that end, the processor (5) must calculate the angular velocity ($\omega$), which determines the change in orientation of the light beam emitter (3) such that the light beam reference (1) of the emitter (3) is incident upon a point of the segment $t_r$ and subsequently allows the forward movement of a preset starting reference speed (1).

In the preferred embodiment, the actuator (4) is a stepper motor and the instructions it receives pertain to angular displacement $\Delta\alpha$, not angular velocity. However, given that the imposed forward movement is every certain time instant $\Delta t$, the effect is one of imposing a rotation speed ($\omega$). It is thereby understood that this specific way of imposing speed is in accordance with the described steps. That is, the movements are discrete and the angular velocity ($\omega$) is considered as the average resulting from measuring the quotient between the angular displacement or the rotated angle $\Delta\alpha$ and the time elapsed $\Delta t$ between the instants in which the forward movement occurs.

$$\omega = \frac{\Delta\alpha}{\Delta t}$$

Lastly, once the angular velocity ($\omega$) of the emitter (3) has been calculated, the processor (5) provides instructions to actuator (4) for the light beam emitter (3) to move forward according to the angular velocity ($\omega$) determined in the preceding step for each corresponding segment ($t_r$).

It should therefore be interpreted that the angular velocity ($\omega$) is calculated directly from the forward speed ($v$) imposed on the optical reference (1), or indirectly, where the angular velocity ($\omega$) is calculated taking, in time intervals $\Delta t$, the intervals of variation of the angle $\Delta\alpha$ in the update of the orientation of the light beam.

Once the forward speed along the longitudinal direction X-X' has been specified, the corresponding angular variation $\Delta\alpha$ is set in the time interval $\Delta t$ and the angular velocity ($\omega$) is thus determined.

In the case of the first segment, in view of Figure 1, the angle $\alpha$ is determined as

$$arctg\left(\frac{x - X_B}{Y_1 - Z_B}\right)$$

where x is the longitudinal coordinate of the target point in the geometric model where the light beam must move forward.

According to another exemplary embodiment, the forward speed is not imposed directly on the longitudinal direction but rather on the surface where, in this case, it is verified that the speed on the surface

$$v_s = \frac{v}{\cos\beta}$$

where v is the forward speed in the longitudinal direction and $\beta$ is the angle of inclination with respect to the origin of the first segment $t_1$ on which the depth $Y_1$ has been set. In general, for other segments $t_r$ the angle $\beta$ will be the angle formed, with respect to the horizontal (the longitudinal direction), by the straight line which connects the initial reference point of the first segment at depth $Y_1$ and the point of the reference (1) on the surface of the geometric model in the instant of time in which speed is assessed.

Figure 1 shows this angle $\beta$ in different positions of the point and in the two segments into which the surface of the bottom of the pool is divided.

The steps are therefore implemented in the processor (5) which acts specifically by determining the angular velocity ($\omega$) of the actuator (4) and acting on same in order to carry out the present rotation $\alpha$.

**Claims**

1. Method for showing a forward speed reference (1) on a surface (2) to an athlete (7), wherein the athlete (7) moves forward according to a longitudinal direction X-X', the method comprising the use of the following elements:

   - a light beam emitter (3);
   - an actuator (4) adapted to modify the orientation of the light beam emitter (3);
   - a processor (5) in communication with the actuator;

   wherein the method comprises the following steps:

   a) defining a geometric model of the surface (2) on which the speed reference (1) is shown;
   b) defining a partition of the surface of the geometric model according to the longitudinal direction X-X' into $n$ segments $t_r$, $r = 1,...,n$, with $n$ being a preset integer;
   c) determining an approximation of the manner in which each segment extends according to the longitudinal direction X-X' by means of a curve;

   and wherein the processor (5) is adapted to carry out the following steps:

   d) providing instructions to the actuator (4) for the light emitter (3), in the operating mode, to be oriented such that the light beam (2) is incident upon a first point of the first segment showing an optical reference (2),
   e) following, in an orderly manner, $r = 1,...,n$, for each segment $t_r$ and according to the longitudinal direction X-X', providing forward movement instructions to the actuator (4) to:

      calculate the angular velocity ($\omega$) that determines the change in orientation of the light beam emitter (3) such that the light beam of the light emitter (3) is incident upon a point of the segment $t_r$ of the surface (2) moving at a preset reference speed;
      provide instructions to the actuator (4) for the light emitter (3) to move forward according to the angular velocity ($\omega$) determined in the preceding step.

2. Method according to claim 1, wherein in step e), the angular velocity is recalculated a plurality of times during the forward movement of the light emitter (3) along the same segment $t_r$.

3. Method according to claims 1 or 2, wherein in step e), the calculated angular velocity ($\omega$) is variable and dependent on the point of incidence (1) of the light beam on the segment $t_r$.

4. Method according to any of the preceding claims, wherein the approximation curve of the manner in which each segment $t_r$ comprised in the geometric model extends is a linear function.

5. Method according to any of the preceding claims, wherein the approximation curve of the manner in which each segment $t_r$ comprised in the geometric model extends is a function defined in segments by polynomial functions, a spline function, or a combination of both.

6. Method according to any of the preceding claims, wherein the preset reference speed is a constant speed of the point of incidence of the beam on the surface (2).

7. Method according to any of claims 1 to 5, wherein the preset reference speed is a speed of the point of incidence of the beam on the surface (2), such that the component of the speed projected on the longitudinal direction X-X' is constant.

8. Method according to any of the preceding claims, wherein $n$, the number of segments, is two.

9. System (6) for showing a forward speed reference on a surface (2) to an athlete, wherein the athlete moves forward according to a longitudinal direction X-X', the system (6) comprising:

   - a light beam emitter (3);
   - an actuator (4) adapted to modify the orientation of the light beam emitter;
   - a processor (5) in communication with the actuator (4); and wherein,

   with the following being preset:

   - a geometric model of the surface (2) on which the speed reference is shown;
   - a partition of the surface of the geometric model according to the longitudinal direction X-X' into $n$ segments $t_r$, $r = 1,...,n$, with $n$ being a preset integer; and
   - an approximation in the manner in which each segment extends according to the longitudinal direction X-X' by means of a curve;

   the processor (5) is adapted to carry out steps d) and e) of claim 1.

10. System (6) according to claim 9, wherein the processor (5) is in communication with the light beam emitter (3) and configured to activate the light beam emitter (3), deactivate the light beam emitter (3), or both actions.

FIG.1

FIG.2

Pool parameters

$Z_b$ = input         $X_b$ = input

$X1$ = input         $Y1$ = input

$X2$ = input         $Y2$ = input

$X_T$ = input

$X_p$ = input         $Y_p$ = input

FIG.3

**Europäisches Patentamt**
**European Patent Office**
**Office européen des brevets**

# EUROPEAN SEARCH REPORT

Application Number

EP 23 38 2798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ES 1 280 254 U (MATA RODRIGUEZ CARLOS [ES]) 27 October 2021 (2021-10-27) * the whole document * | 1-10 | INV. G09B19/00 G01P3/68 |
| A | WO 2019/136325 A1 (OCULA CORP [US]) 11 July 2019 (2019-07-11) * the whole document * | 1-10 | |
| A | CN 105 448 045 B (MA KEFENG) 20 March 2018 (2018-03-20) * the whole document * | 1-10 | |

TECHNICAL FIELDS SEARCHED (IPC)

G09B
G01P

The present search report has been drawn up for all claims

| Place of search | Date of completion of the search | Examiner |
|---|---|---|
| Munich | 10 January 2024 | Bîrlescu, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 38 2798**

This annex lists the patent family members relating to the patent documents cited in the above-mentioned European search report.
The members are as contained in the European Patent Office EDP file on
The European Patent Office is in no way liable for these particulars which are merely given for the purpose of information.

**10-01-2024**

| Patent document cited in search report | | Publication date | Patent family member(s) | | Publication date |
|---|---|---|---|---|---|
| ES 1280254 | U | 27-10-2021 | NONE | | |
| WO 2019136325 | A1 | 11-07-2019 | AU | 2019205949 A1 | 16-07-2020 |
| | | | CA | 3087756 A1 | 11-07-2019 |
| | | | US | 2020023238 A1 | 23-01-2020 |
| | | | US | 2021225021 A1 | 22-07-2021 |
| | | | WO | 2019136325 A1 | 11-07-2019 |
| CN 105448045 | B | 20-03-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10102686 B2